# EUROPEAN PATENT APPLICATION

(11) **EP 4 840 315 A1**
(43) Date of publication of application: **18.11.2026**
(21) Application number: 26178782.4
(22) Date of filing: 14.05.2026
(51) Int. Cl.: A21C 3/02

(54) **MACHINE FOR WORKING DOUGHS**

(30) Priority: 15.05.2025 IT 202500010906
(71) Applicant: Easymac S.r.l., 36015 Schio (VI) (IT)
(72) Inventor: Zanrosso, Fabio, 36015 SCHIO (IT)
(74) Representative: Muraro, Alfeo Federico

(57) **Abstract**

Machine (1) for working doughs, comprising: a support structure (2) that defines a work surface (2a); a working head (3) operatively connected to the support structure (2) and comprising pressure bodies (6) operatively connected to an actuator unit (7) configured to impart to each pressure body (6) an intermittent motion according to a corresponding direction of compression (X) between a distanced position and a proximate position relative to the work surface (2a), and vice-versa, to cause a compression of a corresponding delimited portion of a dough (P) arranged on the work surface (2a); a movement unit (8) to move the pressure bodies (6) relative to the work surface (2a) according to a direction of movement (Z) parallel to the work surface (2a). The actuator unit (7) is configured to modify during time the configuration of the intermittent motion for at least one of the pressure bodies (6).

## Description

### FIELD OF APPLICATION

The present invention generally applies to the technical field of the machines for working food doughs. In particular, the object of the invention is a machine particularly suited for flattening and spreading a leavened dough intended to make pinsas, focaccias, spianatas, and other similar bakery products for which a certain thickness is required.

### STATE OF THE ART

Several bakery products are known comprising a substantially flat-shaped base of leavened dough, on which other ingredients are arranged. Among the above mentioned bakery products there are pizzas, focaccias, spianatas, pinsas, etcetera.

Some of the aforementioned bakery products, particularly pinsas, are characterized by a relatively thick dough bases, that allows to achieve a soft consistency in the finished product. The above mentioned property is different compared to what can be found in, for example, a pizza, in which the dough base is kept relatively thin in order to achieve a certain crunchness.

It is known that, contrary to other bakery products, pinsas are made one by one and, generally, have an oval shape.

According to the classic artisan technique, a pinsa is obtained from a ball-shaped mass of leavened dough, that is worked by hand to compress it using the fingers in order to flatten and spread it until obtaining a substantially flat base of the desired dimension.

The result of the aforementioned handwork is a dough base having an irregular morphology regarding both its perimeter, generally but non perfectly oval, and its surface, that has several hollows generated by the compression of the fingers, and arranged in the most varied positions.

Since the aforementioned irregularity is the main feature of an artisan production, and it is perceived as such by consumers, it increases the value of the finished product. Nevertheless, the artisan technique above described has the drawback of being unsuited for a large-scale production, that requires a high productivity.

In the industrial context, it is known to make dough bases using machines that work a portion of leavened dough having a predefined shape in order to confer it the desired shape.

According to a know technique to make a dough base, described for example in document EP 4 245 145 A1, the dough is worked through rollers or plates having more or less irregular superficial projections that, by being compressed against the dough, squeezes it locally in order to spread it and to impress on it superficial hollows, similar to those of the handwork.

Nevertheless, the above hollows are relatively regular compared to those obtained through the artisan work technique previously described.

According to a different known technique, the dough is worked using a plurality of bars, provided with the aforementioned projections and mutually mobile in such a way that, after arranging the projections in contact with the dough, the mutual distancing between the bars according to directions parallel to the surface of the dough causes the mutual distancing of the projections as well, hence achieving the spreading of the dough.

Despite the aforementioned projections somehow simulate the contact with the fingers, their distancing movement above described is substantially different compared to the movement of the fingers in the artisan process, hence the aforementioned technique is unsuited to make a base morphologically comparable to that achievable through the aforementioned artisan process.

Furthermore, the pinsa base is obtained industrially starting from a portion of dough that has always the same, generally rectangular, shape, except for the usual superficial irregularities due to the leavening. Since the spreading of the dough, industrially achieved as above described, always occurs in the same way as well, the perimeter of the base thus obtained is rather regular.

In the whole, the above described machines of known kind have the drawback of not allowing to obtain a pinsa base having similar morphological features as those of an artisan-made base.

Several expedients are known in order to increase the irregularity of a base obtained through the aforementioned machines, such as, for example, using projections having mutually different, and/or irregular, shapes, and/or cutting the edges of the base to achieve an oval shape.

Anyway, the aforementioned expedients are not sufficient to reproduce the morphology as achieved through an artisan process, and, moreover, they have the drawback of increasing the constructional complexity of the machine and/or of the production process.

### SUMMARY OF THE INVENTION

The present invention aims at overcoming at least in part the aforementioned drawbacks of the prior art.

In particular, it is an aim of the invention to make a machine allowing to produce bases for bakery products, in particular for pinsas, in industrial scale, and having a similar morphology as that achieved through artisan work.

More particularly, is it an aim of of the invention that the aforementioned machine allows to obtain a base having morphological irregularities comparable to those of am artisan-processed base.

Another aim of the invention is that the aforementioned machine is constructionally simpler than the machines of known kind.

The aforementioned aims are achieved by a machine for working doughs according to the main claim.

Further detail features of the invention are specified in the corresponding dependent claims.

Advantageously, the possibility to obtain a base morphologically similar to that achieved through an artisan process contributes to increase the value the consumers confer to the finished product.

The aforementioned aims and advantages, together to other that are mentioned hereinafter, will be apparent from the following disclosure of some preferred embodiments of the invention that are illustrated, as exemplary and non limiting purpose, with the aim of the attached drawings.

### BRIEF DESCRIPTION OF THE DRAWINGS

Fig. 1 schematically shows the machine for working doughs of the invention, in axonometric and partially sectioned view.
Fig. 2 shows the machine of Fig. 1, in plan view.
Fig. 3 shows the machine of Fig. 1, in front view.
Figs. from 4 to 7 show the machine of Fig. 1, in respectively different operative configurations, in plan view.
Fig. 8 shows the detail indicated in Fig. 3 by VIII, in enlarged and partially sectioned view.
Fig. 9 shows the same detail of Fig. 8, in a different operative configuration.

### DETAILED DESCRIPTION OF SOME PREFERRED EMBODIMENTS

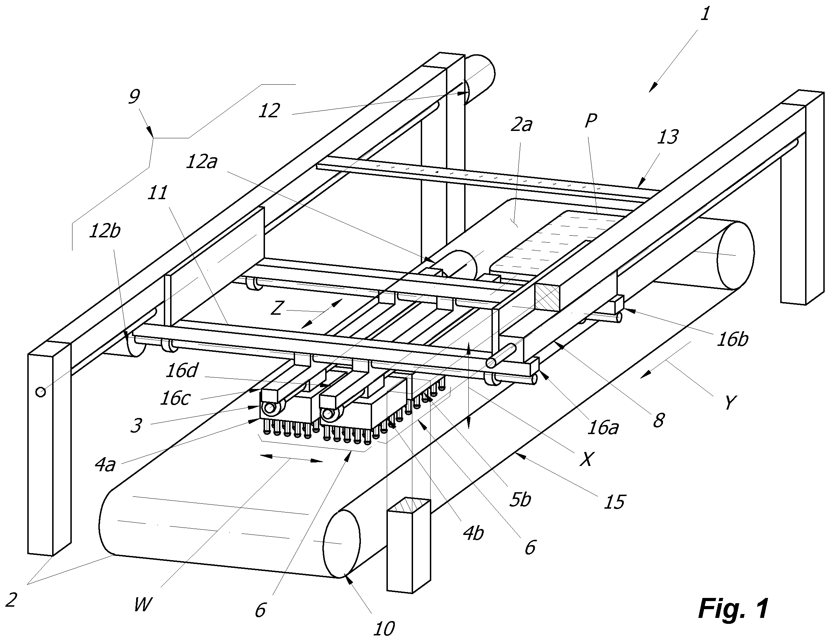

The machine for working doughs of the invention, indicated in Fig. 1 in the overall with **1,** is particularly suited to work a food dough **P** for obtaining a base for pinsas having a morphology similar to that achievable through an artisan process.

It is understood that the machine **1** may be used to obtain bases for other bakery products than pinsas and with a relatively high thickness, for example focaccias, spianatas, etcetera, suitable to undergo a manual processing similar to that of the pinsas.

The dough **P** may be mass of leavened dough having flattened and substantially rectangular shape. Nevertheless, it is understood that the machine of the invention may be used to model doughs having different shapes compared to the one just disclosed.

The machine **1** comprises a support structure **2,** that, in Fig. 1, is shown partially sectioned to allow to see the inner parts of the machine.

The support structure **2** defines a work surface **2a** over which the dough **P** may be spread. Preferably, the machine **1** is configured so that, in operative configuration, the work surface **2a** is arranged substantially horizontal.

Still preferably, the aforementioned support structure **2** comprises a conveyor belt **15,** whose upper surface defines the work surface **2a.**

The machine **1** also comprises a working head **3** operatively connected to the support structure **2,** and configured to compress the dough **P** when it is arranged on the work surface **2a.**

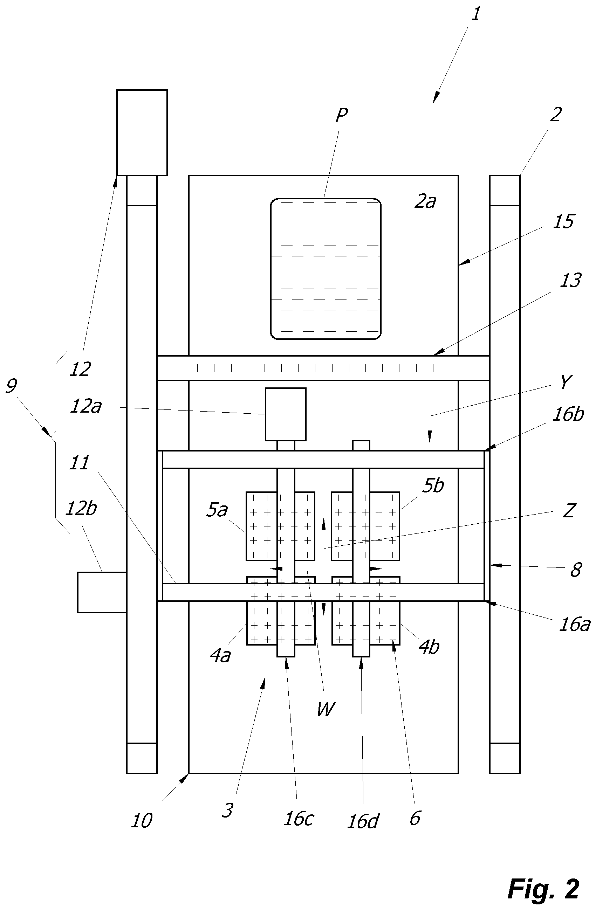

More specifically, the working head **3** comprises a plurality of pressure bodies, collectively indicated in Fig. 1 with **6.** The preferred embodiment, schematically shown in the drawings, envisages the pressure bodies **6** being arranged in a multiplicity of rows, as seen in the plan view of Fig. 2, where the pressure bodies **6** are indicated by corresponding crosses that represent the axes of the pressure bodies **6.**

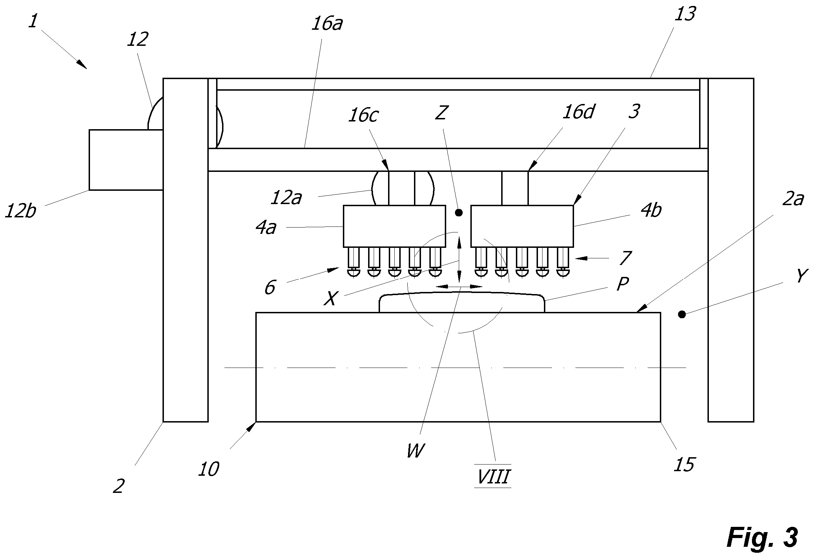

The aforementioned pressure bodies **6** are operated by an actuator unit **7,** schematically indicated in Fig. 3, configured to exert a compression on corresponding delimited portions of the dough **P,** corresponding to the operative areas of the pressure bodies **6.**

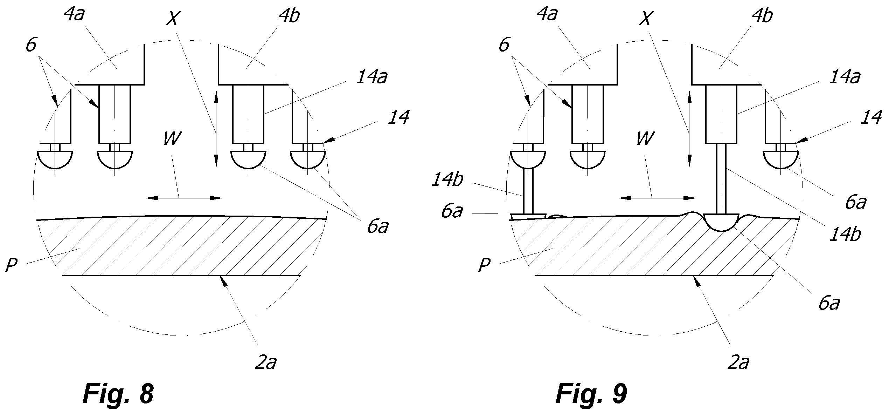

Preferably, and as seen more in detail in Fig. 8, each pressure body **6** has a curved and convex end **6a,** facing the work surface **2a.** Still preferably, the aforementioned end **6a** is configured in such a way that its projection on the work surface **2a** has the shape of a circle, of an oval, or of another similar shape, preferably without corners. Furthermore, preferably, the transverse dimension of the aforementioned projection is comparable to the dimension of a finger, for example in the order of 1 cm - 1.5 cm.

As a result of the above, the aforementioned end **6a** reproduce the shape of the end of a human finger, hence it is suited to leave a similar impression on the dough **P,** so that its compression action simulates a process by an artisan.

More specifically, the actuator unit **7** is configured to impart, to each pressure body **6,** an intermittent motion according to a corresponding direction of compression **X** incident on the work surface **2a,** in such a way as to move the pressure body **6** itself relative to the work surface **2a** between a distanced position, shown in Fig. 8, and a proximate position, shown in Fig. 9, and vice versa. In particular, in the aforementioned distanced position, the pressure body **6** is separated from the dough **P,** while, in the proximate position, the pressure body **6** is arranged in contact with the dough **P,** in order to partially penetrate therein and compress it at the corresponding delimited portion.

It is hereby specified that the impression shown in Fig. 9 is merely exemplary. The machine **1** of the invention may be configured to obtain an impression in the dough **P** at portions of any entity and extension.

The aforementioned intermittent motion comprises a sequence of operational cycles. Each operational cycle comprises a first phase in which the actuator unit **7** acts on the pressure body **6,** arranged in distanced position, to push it towards the proximate position, followed by a second phase, in which the actuator unit **7** acts on the pressure body **6** in order to bring it back to the distanced position.

During the aforementioned first phase of the operational cycle, the pressure body **6** travels a given stroke, during which it is brought in contact with the dough **P,** and sinks therein for a certain depth.

Preferably, the actuator unit **7** is configured to impart to the pressure body **6** a force that is high enough to render the aforementioned stroke substantially predefined, that is, depending on the mechanical features of the actuator unit **7,** but substantially independent from the consistency of the dough **P.**

In variant embodiments of the invention, the aforementioned force may be lower than the one above disclosed and, in such a case, the stroke of the pressure body **6** may depend on the consistency of the dough **P.**

In any case, the actuator unit **7** preferably comprises adjusting means, not shown in the drawings, suited to change the distanced position and/or the stroke of one or more pressure bodies **6** according to the direction of compression **X** in order to change their proximate position as well. Advantageously, the aforementioned adjusting means allow to change the penetration depth of the aforementioned pressure bodies **6** in the dough **P** based on the thickness thereof.

The operational cycle may envisage, between the first phase and the second phase, an intermediate standing phase in which the force applied on the pressure body **6** remains unchanged, hence the pressure body **6** keeps a substantially unaltered position according to the direction of compression **X.**

Moreover, the intermittent motion comprises a pausing between two consecutive operational cycles, during which the pressure body **6** remains in the distanced position. Preferably, the directions of compression **X** of all pressure bodies **6** are mutually parallel and, even more preferably, orthogonal to the work surface **2a.** Nevertheless, variant embodiments of the invention may envisage different directions of compression **X** compared to those above disclosed, that may also be different among the different pressure bodies **6** in order to increase the working irregularity.

Preferably, the configuration of the movement unit **8** and the number of pressure bodies **6** are such as to allow obtaining an action that, in its whole, extends on the entire work surface **2a,** and, hence, on the entire dough **P** or, at least, on the main part of their extension.

In particular, the actuator unit **7** is configured in such a way as to vary during time the configuration of at least one of the aforementioned intermittent motions imparted to a corresponding pressure body **6,** with the consequence that the aforementioned intermittent motion does not repeat itself cyclically.

The aforementioned variation may concern the configuration of the operational cycles, that may be mutually different, and/or the frequency of their execution, that is, by varying during time the time interval between the start of an operational cycle and the start of the next one.

Thanks to the aforementioned variation in the intermittent motion, the compressions generated by each pressure body **6** on the dough **P** irregularly repeat themselves, hence generating a corresponding irregularity in the depressions produced by the pressure body **6** on the dough **P** as well.

As also seen in Fig. 1, the machine **1** further comprises a movement unit **8** for the movement of the pressure bodies **6** relative to the work surface **2a** and, hence, to the dough **P** that lies thereon, according to a direction of movement **Z** parallel to the work surface **2a.** The movement just disclosed implies the possibility to make each pressure body **6** acting on different portions of the dough **P.**

The aforementioned movement of the pressure bodies **6** according to the direction of movement **Z,** together with the irregularity of the movement according to the direction of compression **X,** allows to simulate the effect of the pressure of a human operator's fingers on the dough **P,** hence achieving the aim to obtain a morphologically irregular base.

Furthermore, the invention achieves the aforementioned result by simply acting on the configuration of the intermittent motion, with no need to use pressure bodies **6** having mutually different geometries, or to add further process phases. That does not exclude that variant embodiments of the invention may envisage pressure bodies **6** having mutually different geometries, in order to further increase the irregularity of the working process.

Still preferably, the actuator unit **7** is configured in such a way that the variation in the intermittent motion concerns a plurality of pressure bodies **6** and, more preferably, all pressure bodies **6,** in order to increase the aforementioned irregularity.

Still preferably, the actuator unit **7** is configured in such a way that the intermittent motions of the different pressure bodies **6** vary independently from one another, thus rendering the intermittent motions mutually asynchronous, with the advantage to further increase the aforementioned irregularity.

Preferably, the aforementioned variation in the intermittent motion is achieved by modifying one or more operational parameters that define the intermittent motion, and that may comprise, for example, the duration of the pausing between two consecutive operational cycles, or the interval between the start of the aforementioned two operational cycles, the duration of the intermediate phase of each operational cycle, if present, etcetera.

Advantageously, the variation of the aforementioned operational parameters is achieved in a simple way, by acting on the starting times of the first phase and/or of the second phase of each cycle, with no need to change the execution mode of each of the two phases, i.e., the motion profile of the corresponding pressure body **6** during the aforementioned phases.

What has just been disclosed may be achieved, for example, through a logic unit, not shown in the drawings, but per-se known, conveniently configured for control the actuator unit 7 in such a way as to vary the aforementioned operational parameters as above disclosed. If the logic unit is of the programmable kind, the aforementioned configuration may be achieved through a convenient programming.

Nevertheless, variant embodiments of the invention may envisage that the aforementioned variation in the intermittent motions also concerns their spatiotemporal development during the aforementioned first phase and second phase, particularly their duration and/or the length of the corresponding movements, provided the actuator unit **7** is operable to allow adjusting said further operational parameters.

In all variants above described, the variation during time of the configuration of the intermittent motion may be achieved in a predefined way, for example based on a suitable algorithm.

More preferably, the aforementioned variation occurs randomly or pseudo-randomly. The term "random" is meant in its usual meaning of "unpredictable", which is an intrinsic property of several physical processes, for example, the quantum ones.

On the other hand, the "pseudo-randomness" is a simulated randomness, that may be achieved through deterministic algorithms, that generate events whose statistical distribution is similar to that of the random events. Despite each pseudo-random event is predetermined and, hence, mathematically predictable, for practical purposes the sequence of the events cannot be distinguished from a random sequence.

Both randomness and pseudo-randomness can be implemented in the aforementioned logic unit in known ways, at electronic and/or software level.

For the sake of simplicity, the adjective "random" will be used hereinafter to mean both the actual randomness, and the pseudo-randomness.

It is understood that the insertion of randomness in the working process allows to achieve a result that is particularly similar to the one achievable through a manual processing, which also features some randomness, at least apparently.

The aforementioned randomness may be applied for determining the operational parameters of the intermittent motion, that are then used to define the instants when the actuator unit **7** operates the pressure bodies **6.**

Alternatively, the randomness may be used to directly control the action of each pressure body **6.** For example, the randomness may be used to establish whether, in each instant of a predefined sequence of instants, a given pressure body **6** should, or should not, start the operational cycle, or one of the above described phases thereof. In the latter case, the variation in the intermittent motions is a consequence of the aforementioned random control of the pressure bodies **6.**

In any case, the aforementioned random variation in the configuration of the intermittent motion allows, advantageously, to achieve a high irregularity of the operational cycles, contributing to achieve the aim of obtaining an effect on the dough **P** as similar as possible to that produced by the fingers during manual processing. The compression action exerted by the pressure bodies **6** on different portions of the dough **P** also implies, as collateral effect, a certain stretching of the dough. Nevertheless, the invention envisages to actively promote the aforementioned stretching. To that end, the movement unit **8** is preferably configured to move the pressure bodies **6** according to the aforementioned direction of movement **Z** during the intermittent motion of the pressure bodies **6,** that is, during their activation by the actuator unit **7.**

Thanks to the configuration just disclosed, when a pressure body **6** is in contact with the dough **P,** and partially sunk into it, its simultaneous movement according to the direction of movement **Z,** i.e. laterally compared to the direction of compression **X,** has the effect of causing a corresponding lateral stretching of the dough **P** that, actually, implies a widening of the latter in the same direction of movement **Z.**

Despite the widening of the dough **P** generated by each pressure body **6** being localized, the sequential and/or combined action of several pressure bodies **6** induces a gradual widening of the entire dough **P.** Given the asynchrony of the intermittent motions between different pressure bodies **6,** the widening occurs in a rather irregular way, with the advantage to obtain a dough base delimited by an edge which is also irregular, similar to that which can be obtained through a manual processing.

The advantage just mentioned is even more evident if the intermittent motion of the pressure bodies **6** is random, because the randomness causes an unpredictable widening, hence increasing the irregularity of the final shape of the dough **P.**

To achieve what has just described above, and as seen in Fig. 1, the movement unit **8** preferably comprises at least two support elements **4a, 5a,** each one of which supports a given number of the aforementioned pressure bodies **6.**

Preferably, a same number of pressure bodies **6** is associated to each of the aforementioned support elements **4a, 5a.** Nevertheless, it is not excluded that variant embodiments of the invention may envisage different numbers of pressure bodies **6** for the different support elements.

Further variant embodiments of the invention, not shown in the drawings as well, may comprise a single support element to which all the pressure bodies **6** are connected.

Still preferably, the pressure bodies **6** associated to each support element **4a, 5a** are arranged according to one or more parallel rows, each one of which develops according to an alignment direction that is transverse to the direction of movement **Z,** such that the corresponding compression actions concern a range of the work surface **2a** extending for a given length according to the aforementioned alignment direction. Preferably, the pressure bodies **6** are arranged according to a plurality of the aforementioned rows.

In variant embodiments of the invention, not shown in the drawings, the aforementioned pressure bodies **6** may be mutually aligned to form a single row.

In a further variant embodiment of the invention, not shown in the drawings, the pressure bodies **6** of one of the aforementioned rows may be staggered, according to the aforementioned alignment direction, with respect to those of the thereof adjacent rows.

The movement unit **8** further comprises a first actuator unit **9** configured to move each support element **4a, 5a** and, hence, the pressure bodies **6** associated thereof, relative to the work surface **2a** according to the direction of movement **Z.**

It is understood that the aforementioned grouping of pressure bodies **6** in a given number of support elements **4a, 5a** brings the advantageous effect to simplify the mechanical configuration of the movement unit **8** and, in particular, of the first actuator unit **9.**

Preferably, the first actuator unit **9** is configured to move the two support elements **4a, 5a** away from one another according to the direction of movement **Z.**

Advantageously, the aforementioned movement between the two support elements **4a, 5a** also makes the corresponding pressure bodies **6** to move away according the direction of movement **Z.**

It is understood that the aforementioned movement, made during the operation of the pressure bodies **6,** allows to achieve a gradual widening of the dough **P** according to the direction of movement **Z** in a simple way. In fact, thanks to the independence and asynchrony of the intermittent motions of the different pressure bodies **6,** it is likely that, at any given time, one or more pressure bodies **6** of each support element **4a, 5a** are simultaneously in the proximate position, i.e., in contact with the dough **P,** as seen in Fig. 9. As a result, their concurrent movement away from each other according to the direction of movement **Z** causes a traction on the dough **P** according to the alignment direction of the aforementioned pressure bodies.

Furthermore, since the pressure bodies **6** associated with the two support elements **4a, 5a** and simultaneously in contact with the dough **P** change continuously during time, the aforementioned alignment direction, hence the direction of the traction, changes consequently, resulting in an effect that is particularly similar to that of a manual processing.

Because of the above, preferably, the operational parameters that define the intermittent motion of the pressure bodies **6,** in particular the duration of the intermediate phase and of the pausing previously disclosed, as well as those that defines the variation during time of the said motion, are defined based on the number of the pressure bodies **6** in such a way as to ensure that, during at least a portion of the overall working time of the dough **P,** at least two pressure bodies **6** that belong to, respectively, the two support elements **4a, 5a,** are simultaneously in contact with the dough **P.**

The aforementioned portion may be any, according to the desired kind of processing and/or on the speed of the mutual movement between the support elements **4a, 5a.** If the intermittent motion is random, the aforementioned operational parameters may be defined through statistical formulae based on the aforementioned portion of time.

The aforementioned operational parameters may be also adjusted empirically, through lab tests.

The values for the operational parameters so determined may be used in configuring the machine **1,** by setting them at electronic and/or software level.

It is also possible to give the user the possibility to change the aforementioned values in order to obtain different results.

The aforementioned change may envisage, for example, the selection of a program among a plurality of different preset programs incorporated in the machine **1,** each one of which envisages different values for the aforementioned operational parameters. Still preferably, the movement unit **8** comprises a second actuator unit **10** for the advancement of the work surface **2a** relative to the support structure **2** according to a direction of advancement **Y.** Advantageously, the aforementioned advancing allows to transport a plurality of doughs **P** in sequence at the working head **3,** thus rendering the machine **1** particularly suited to be used in an industrial processing line.

If the work surface **2a** is defined by the conveyor belt **15** previously disclosed, the aforementioned second actuator unit **10** may comprise a motor applied to the conveyor belt **15,** not shown in the drawings but per-se known, suited to obtain the aforementioned advancement.

Preferably, the aforementioned first actuator unit **9** comprises a support frame **11** supporting all the support elements **4a, 5a,** and that is slidingly associated to the support structure **2** through a first actuator **12** for moving the support frame **11** relative to the support structure **2** according to the direction of advancement **Y** along a predefined stroke.

The first actuator **12** is controlled for moving the support elements **4a, 5a** in synchrony with the aforementioned advancement of the work surface **2a.**

The first actuator unit **9** further comprises one or more second actuators **12a** for the movement of the support elements **4a, 5a** relative to the support frame **11,** irrespective of the position of the latter along the aforementioned stroke.

As a result of the above, the movement of each support element **4a, 5a** corresponds to the combination of the aforementioned advancement imparted by the first actuator **12,** that keeps the relative position of the support element **4a, 5a** relative to the work surface **2a** according the direction of advancement **Y** unchanged, and a further shifting movement according to the direction of movement **Z** imparted by the second actuators **12a.**

In the machine shown in the figures, the two support elements **4a, 5a** are moved through a single second actuator **12a** to move the two elements in a mutually opposite fashion, in order to cause their mutual distancing and approaching.

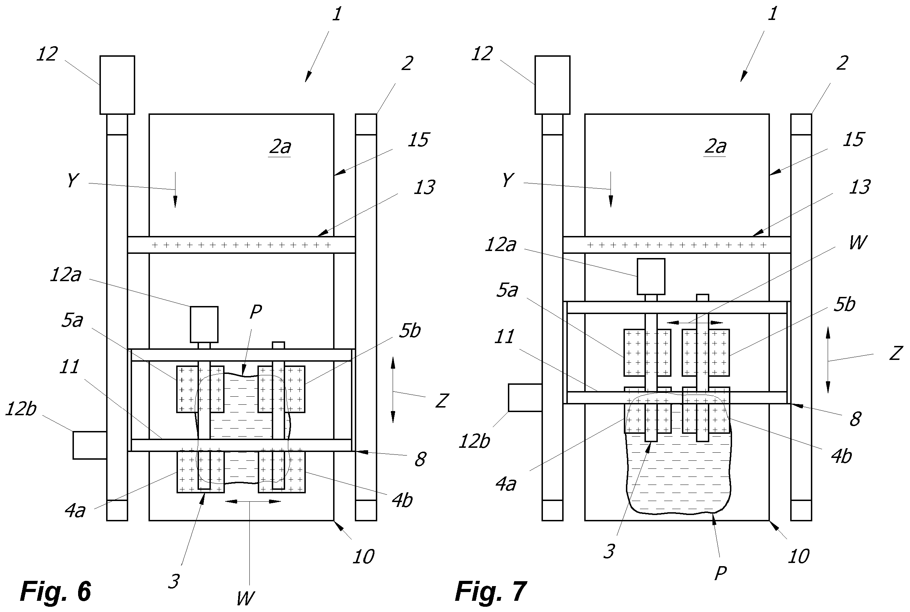

The aforementioned second actuator **12a** has a predefined travel between a configuration of maximum approach between the support elements **4a, 5a** according to the direction of movement **Z,** as shown for example in Figs. from 2 to 4, and a configuration of maximum distance between the support elements **4a, 5a,** shown for example in Fig. 6.

A variant embodiment of the invention may envisage that the two support elements **4a, 5a** are independently controlled through corresponding second actuators **12a,** with the advantage of a higher versatility of use.

In any case, preferably, the two support elements **4a, 5a** are moved at the same speed relative to the work surface **2a,** yet on opposite directions.

Preferably, the direction of advancement **Y** of the work surface **2a** is parallel to the direction of movement **Z** of the support elements **4a, 5a.** As a result, both advancement and shifting movements above described occur according the same direction of movement **Z.**

Advantageously, the configuration just disclosed allows to limit the transverse dimension of the machine **1.** In fact, in that case, it is possible to limit the width of the work surface **2a** to the maximum foreseen for the dough **P,** since the stretching of the dough **P** obtained through the process mainly occurs along the direction of advancement **Y** of the work surface **2a.**

What has been just disclosed doesn't exclude variant embodiments of the invention, not shown in the drawings, in which the aforementioned directions **Y** and **Z** are mutually incident, for example orthogonal.

Still preferably, a combination of the two cases just disclosed is used.

In particular, the first actuator unit **9** is preferably configured to move each support element **4a, 5a,** together with the corresponding pressure bodies **6,** relative to the work surface **2a** according to the direction **W** that is transverse to the direction of movement **Z** and parallel to the work surface **2a.**

Advantageously, the transverse motion just disclosed allows a further increase of the versatility of the machine **1.**

For example, the transverse motion just disclosed may be achieved through one or more third actuators **12b** similar to the second actuators **12a** above disclosed, configured to move the support elements **4a, 5a** relative to the support frame **11.**

Still preferably, the movement unit **8** comprises other two support elements **4b, 5b,** similar to the first two support elements **4a, 5a** above described.

In particular, the first actuator unit **9** is preferably configured in such a way as to make the first two support elements **4a, 5a** moving away from the second two support elements **4b, 5b** along the aforementioned transverse direction **W.**

Advantageously, the distancing movement just disclosed allows to obtain the widening of the dough **P** according to the transverse direction **W** as well, in a similar way as that previously disclosed for the widening according to the direction of movement **Z.** According to a variant embodiment of the invention, not shown in the drawings, a result similar to that just disclosed is achieved by providing two working heads **3,** arranged in series along the direction of advancement **Y,** configured to move corresponding pressure bodies **6** according to respective different directions of movement **Z** that, for example, may be, respectively, parallel and orthogonal to the direction of advancement **Y.** As a result, advantageously, it is possible to obtain a further widening of the dough **P** in both directions.

A further variant embodiment of the invention, not shown in the drawings, may envisage to move the pressure bodies **6** individually according to one of, or both, the direction of movement **Z** and transverse direction **W,** in such a way that they are moved away from one another. What has just been disclosed may be achieved, for example, through pantograph actuators.

Preferably, the machine **1** further comprises a sensor unit **13** configured to determine the presence of the dough **P** in one or more predefined positions relative to the working head **3.** Preferably, the sensor unit **13** comprises a bar, developed in length according to a direction orthogonal to the direction of advancement **Y,** along which a plurality of sensors are aligned, whose positions are schematically shown in the figures by crosses.

Advantageously, the aforementioned sensors allow to detect the presence of the dough **P** in different specific positions spread along the length of the work surface **2a,** thus allowing to determine the dimension of the dough **P** according to a transverse direction to the work surface **2a.**

Variant embodiments of the invention may comprise a single sensor to detect the presence of the dough **P** in a single position that corresponds, for example, to the center of the work surface **2a.** Further variant embodiments may comprise a single sensor extending along the entire length of the work surface **2a,** and capable to detect the presence of the dough **P** in a multiplicity of positions.

The aforementioned sensors may be optical, laser, or of whatever else known kind.

In any case, the actuator unit **7** is configured to operate selectively the pressure bodies **6** based on the signals received by the aforementioned sensor unit **13,** suitably processed from the logic unit.

Advantageously, the configuration just disclosed allows to automatize the processing, for example by inhibiting the action of specific pressure bodies **6** whose operating area is located outside of the dough **P,** and/or by inhibiting the action of all the pressure bodies **6** of a support element **4a, 4b, 5a, 5b if** the overall operating area defined by the latter is outside of the dough **P.**

As regards the actuator unit **7,** preferably, and as seen in Fig. 3, it comprises a plurality of fluid actuators **14,** each one of which is individually controlled to impart the intermittent motion to a corresponding pressure body **6.**

More preferably, and as seen in Fig. 8, each fluid actuator **14** comprises a corresponding cylinder **14a,** mechanically associated to one of the aforementioned support elements **4a, 4b, 5a, 5b,** and a piston **14b** having an end slidingly associated to the cylinder **14a** and carrying the pressure body **6** at the opposite end.

Still preferably, the aforementioned fluid actuators **14** are pneumatic actuators, that have the advantage of being controllable in a simple and versatile way, for example by means of electrovalves operated by the aforementioned logic unit in order to put the cylinder **14a** in communication with a pressure generator. The electrovalves and the pressure generator are not shown in the drawings, but are per-se known.

As regards the number and arrangement of the pressure bodies **6,** by exemplary and non limiting purpose, the variant embodiment shown in the drawings comprises, for each support element **4a, 4b, 5a, 5b,** a number of pressure bodies **6** organized in 5 rows having 5 elements each, 25 pressure bodies **6** in total for each support element **4a, 4b, 5a, 5b,** i.e., 100 pressure bodies **6** in overall.

It is clear that, in variant embodiments of the invention, the total number of pressure bodies **6,** as well as their distribution among the support elements **4a, 4b, 5a, 5b** and their distribution thereof, may differ from what above disclosed, according to the kind of dough **P** to be worked and the kind of process to be performed.

As regards the configuration of the actuators **12, 12a** and **12b,** preferably but not necessarily each one of them comprises a corresponding motor, for example of the stepper kind, at the shaft of which a corresponding threaded bar is operatively connected that, in turn, gears a nut screw that is operatively associated to the component, or components, to be moved, in order to convert the rotary motion of the threaded bar into a translation motion of the component.

In particular, the first actuator **12** moves the support frame **11** relative to the support structure **2,** while the second actuator **12a** and the third actuator **12b** move the support elements **4a, 4b, 5a, 5b** relative to the support frame **11.**

Preferably, the support elements **4a, 4b, 5a, 5b** are operatively connected to the support frame **11** through a system of linear guides of a per-se known kind, which may be arranged in series to one another and be operated by the second actuator **12a** and by the third actuator **12b** in order to achieve the movements according to both the direction of movement **Z** and the transverse direction **W.**

In the figures four of the aforementioned linear guides are shown, indicated con **16a-16d.** The two guides **16a, 16b** belong to the support frame **11** and slidingly support, according to the transverse direction **W,** two further guides **16c, 16d,** each one of which, in turn, slidingly supports two of the support elements **4a, 4b, 5a, 5b** according to the direction of movement **Z.**

Variant embodiments of the invention may envisage, for the first actuator unit **9** and/or the actuators **12, 12a, 12b,** any configuration of known kind different from the one above disclosed, provided it is suited to achieve the aforementioned motion. Operatively, and as schematically shown in Figs. 2-9, the processing of the dough **P** through the machine **1** above described occurs in the following way.

First of all, the dough **P** is arranged on the work surface **2a** in the position shown in Fig. 2, upstream of the working head **3.**

Before that, the first actuator unit **9** had arranged the working head **3** in an initial configuration in which the support frame **11** is arranged at the most upstream end of its stroke according to the advancement direction of the work surface **2a,** and the support elements **4a, 4b, 5a, 5b** are in the configuration of maximum mutual approach.

At that point, the work surface **2a** is made to advance by the second actuator unit **10** according to the direction of advancement **Y** in order to transport the dough **P** towards the operational area of the working head **3.**

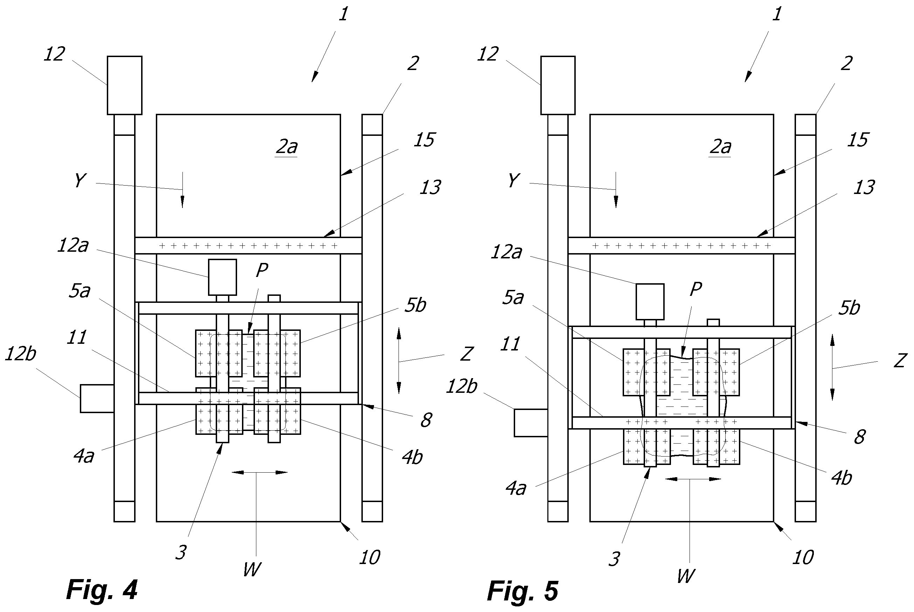

The signals coming from the sensor unit **13** allow to detect the presence of the dough **P,** and its extension according to the direction of advancement **Y,** in order to detect the central area of the dough **P** and establish, on the basis of the advancement speed of the work surface **2a,** the moment in which the central area of the dough **P** is arranged at the central area of the working head **3,** as indicated in Fig. 4.

At that point, the actual working process may begin, in which the actuator unit **7** operates the pressure bodies **6** in the way above disclosed. The operation of each pressure body **6** causes its alternate and intermittent movement between the distanced position, shown in Fig. 8, in which the pressure body **6** is raised from the dough **P,** and the proximate position, shown in Fig. 9, in which the pressure body **6** is pushed against the dough **P** and compress it locally, hence deforming it.

Fig. 9 shows a configuration in which two pressure bodies **6** are lowered, the one on the right being in the foreground, the one on the left being in one of the rows behind.

Together with the operation of the pressure bodies **6,** the first actuator **12** moves the support frame **11** synchronously with the advancing motion of the work surface **2a,** while the second actuator **12a** causes the support elements **4a, 4b** to gradually move away from the support elements **5a, 5b** according to the direction of movement **Z,** and the third actuator **12b** causes the support elements **4a, 5a** to gradually move away from the support elements **4b, 5b** according to the transverse direction **W,** in order to perform the working process and to stretch the entire dough **P** according to both aforementioned directions. Figs. 5 and 6 show two consecutive phases of the motion just disclosed.

Preferably but not necessarily, the movements away generated by the second actuator **12a** and by the third actuator **12b** are simultaneous, uniform, and mutually proportional, in such a way that the movements of the support elements **4a, 4b, 5a, 5b** relative to the support frame **11** occur according to corresponding substantially rectilinear trajectories that radiate out from the configuration of maximum mutual approach towards that of maximum mutual distance.

Variant embodiments of the invention may envisage that the aforementioned movements away occur in a different way as that above described, for example not simultaneously, and/or dis-uniformly, and/or not mutually proportional.

When the dough **P** has been entirely worked, the pressure bodies **6** are arranged in the distanced position in order to allow the working head **3** to return in the aforementioned initial configuration, shown in Fig. 7.

At that point, the working process is finished and the cycle may be repeated on a new dough **P.**

From what above described, it is understood that the machine for working doughs according to the invention achieves the preset aims.

In particular, the provision of pressure bodies operated mutually independently and asynchronously with respective intermittent motions allows to obtain a particularly irregular base, achieving a result similar to that achievable through an artisan process. The variation during time of the aforementioned intermittent motions contributes to achieve the aforementioned aim.

The random operation the aforementioned variation further contributes to achieve the aforementioned aim.

Furthermore, the aforementioned result is achievable with no particular mechanical complications, hence achieving the aim to make a machine constructionally simpler compared to the machines of known kind having similar functional features.

The invention is susceptible of changes and variants, all falling within the inventive concept expressed in the attached claims. In particular, the elements of the invention may be replaced by other elements technically equivalent thereof.

Furthermore, the materials may be chosen according to the needs, yet without departing from the scope of the invention.

Furthermore, one or more elements of a specific embodiment of the invention that are technically compatible with another specific embodiment of the invention may be introduced in the latter in addition to, or to replace, elements of the latter.

Where the technical elements specified in the claims are followed by reference signs, those reference signs are included for the sole purpose to improve the intelligibility of the invention, hence they do not imply any limitation to the claimed scope of protection.

## Claims

1. Machine (1) for working doughs, comprising:
- a support structure (2) that defines a work surface (2a);
- a working head (3) operatively connected to said support structure (2) and comprising a plurality of pressure bodies (6) operatively connected to an actuator unit (7) configured to impart to each one of said pressure bodies (6) a corresponding intermittent motion according to a corresponding direction of compression (X) between a distanced position and a proximate position relative to said work surface (2a), and vice-versa, in order to cause a compression of a corresponding delimited portion of a dough (P) arranged on said work surface (2a);
- a movement unit (8) to move said pressure bodies (6) relative to said work surface (2a) according to a direction of movement (Z) parallel to said work surface (2a);
**characterized in that** said actuator unit (7) is configured in such a way as to modify during time the configuration of said intermittent motion for at least one of said pressure bodies (6).

2. Machine (1) according to claim 1, **characterized in that** said actuator unit (7) is configured in such a way as to modify during time the configuration of the intermittent motion of each pressure body (6) of a plurality of said pressure bodies (6) independently of the intermittent motions of the other said pressure bodies (6) of the said plurality.

3. Machine (1) according to claim 2, **characterized in that** said actuator unit (7) is configured in such a way that said modification is random or pseudo-random.

4. Machine (1) according to any preceding claim, **characterized in that** said movement unit (8) is configured to move said pressure bodies (6) according to said direction of movement (Z) during said intermittent motion of said pressure bodies (6).

5. Machine (1) according to any preceding claim, **characterized in that** said movement unit (8) comprises at least two support elements (4a, 4b, 5a, 5b), each one of which supports one or more corresponding of said pressure bodies (6), and a first actuator unit (9) configured to move each one of said two support elements (4a, 4b, 5a, 5b), together with the corresponding said pressure bodies (6), relative to said work surface (2a) according to said direction of movement (Z).

6. Machine (1) according to claim 5, **characterized in that** said first actuator unit (9) is configured to move said at least two support elements (4a, 4b, 5a, 5b) away from each other according to said direction of movement (Z).

7. Machine (1) according to any claim 5 or 6, **characterized in that** said movement unit (8) comprises a second actuator unit (10) for the advancement of said work surface (2a) relative to said support structure (2) according to said direction of movement (Z).

8. Machine (1) according to any preceding claim from 5 to 7, **characterized in that** the intermittent motions of said pressure bodies (6) are defined based on the number of said pressure bodies (6) in such a way as to ensure that, during at least a portion of the overall working time of said dough (P), at least two of said pressure bodies (6) belonging to, respectively, said at least two support elements (4a, 4b, 5a, 5b), are simultaneously in contact with said dough (P).

9. Machine (1) according to any preceding claim from 5 to 8, **characterized in that** it comprises at least four of said support elements (4a, 4b, 5a, 5b), said first actuator unit (9) being configured to move said at least four support elements (4a, 4b, 5a, 5b), together with the corresponding said pressure bodies (6), relative to said work surface (2a) according to a direction (W) that is transverse to said direction of movement (Z) and is parallel to said work surface (2a), and in such a way as to move away two of said four support elements (4a, 5a) from the other two of said four support elements (4b, 5b) according to said transverse direction (W).

10. Machine (1) according to any preceding claim, **characterized in that** said actuator unit (7) comprises a plurality of fluid actuators (14), each one of which is individually operable to impart said intermittent motion to a corresponding one of said pressure bodies (6).

11. Machine (1) according to any preceding claim, **characterized in that** each one of said pressure bodies (6) has a curved and convex end (6a) facing said work surface (2a).

12. Machine (1) according to any preceding claim, **characterized in that** said directions of compression (X) of said pressure bodies (6) are mutually different.

13. Machine (1) according to any preceding claim, **characterized in that** said intermittent motion of each pressure body (6) comprises an intermediate phase during which said pressure body (6) is kept in said proximate position.

14. Machine (1) according to any preceding claim, **characterized in that** said actuator unit (7) comprises adjusting means suited to modify said distanced position, and/or the stroke according to said direction of compression (X), of one or more of said pressure bodies (6).

15. Machine (1) according to any preceding claim, **characterized by** comprising a sensor unit (13) configured to determine the presence of said dough (P) in predefined positions with respect to said working head (3), said actuator unit (7) being configured to selectively operate said pressure bodies (6) based on the signals received by said sensor unit (13).
